# EUROPÄISCHE PATENTSCHRIFT

(11) **EP 3 456 583 B1**
(45) Veröffentlichungstag und Bekanntmachung des Hinweises auf die Patenterteilung: **04.11.2020**
(21) Anmeldenummer: 18193613.9
(22) Anmeldetag: 11.09.2018
(51) Int. Cl.: B60N 2/75

(54) **ARMLEHNE**
ARMREST
ACCOUDOIR

(30) Priorität: 13.09.2017 DE 102017121255
(43) Veröffentlichungstag der Anmeldung: 20.03.2019
(73) Patentinhaber: GRAMMER AG, 92224 Amberg (DE)
(72) Erfinder: Nuss, Ralph, 92284 Poppenricht (DE); Delling, Gerhard, 92546 Schmidgaden (DE)
(74) Vertreter: Roche, von Westernhagen & Ehresmann

(56) Entgegenhaltungen:
- EP-A2- 1 400 401
- WO-A1-2010/002261
- DE-A1- 10 126 536
- DE-A1-102014 220 049

## Beschreibung

Die Erfindung betrifft eine Armlehne.

Eine solche Armlehne ist z.B. aus der DE 10 2007 013 081 bekannt. Eine Armauflage der Armlehne ist zwischen einer ersten Position und einer zweiten Position bewegbar an Führungsrohren geführt. Auf diese Weise kann die Position der Armauflage nach den Bedürfnissen des Sitzinsassen eingestellt werden.

Bei solchen Armlehnen aus dem Stand der Technik war es üblich jedes Führungsrohr in zwei Gleitlagern zu führen, wobei die Gleitlager von elastisch verformbaren Kunststoffringen, insbesondere z.B. von Ringen aus dem Material Cellasto® der BASF, gebildet waren. Aufgrund der elastischen Verformbarkeit gaben diese Ringe bei einer Belastung nach, bis das Führungsrohr an dem steifen Aufnahmeelement zur Anlage kam, in welchem der Ring angeordnet war. Die Verlagerung der Armauflage infolge der elastischen Verformung des Ringes nahm der Benutzer als deutliches Spiel wahr. In den Endlagen kann dieses Spiel durch Auffahrrampen beseitigt werden. In Zwischenpositionen, ist das - insbesondere wenn die Armlehne nicht verriegelbar ist - nicht möglich und für den Benutzer daher besonders störend. Die EP1400401 zeigt eine Armlehne mit einer Basis und mit einer Armauflage, welche relativ zu der Basis über Zwischenpositionen zwischen einer ersten Position und einer zweiten Position in entgegengesetzte Verschieberichtungen entlang einer Bewegungsbahn translatorisch verschiebbar ist, mit einer Führungsvorrichtung umfassend der Basis zugeordnete erste Führungsmittel und der Armauflage zugeordnete zweite Führungsmittel, die zusammenwirkende, relativ zueinander bewegbare Führungsflächen ausbilden, welche die Bewegung der Armauflage relativ zu der Basis in wenigstens eine Richtung rechtwinklig zur Verschieberichtung begrenzen, wobei zwischen den ersten Führungsmitteln und den zweiten Führungsmitteln ein Spiel ausgebildet ist und wobei im Falle einer Belastung mit einer auf die Armauflage einwirkenden Kraft Führungsflächen der ersten Führungsmittel und der zweiten Führungsmittel in Kontakt stehen.

Es war Aufgabe der Erfindung eine Armlehne mit einer zwischen einer ersten Position und einer zweiten Position verlagerbaren Armauflage zu schaffen, die bei einer Belastung annähernd spielfrei ist.

Die Aufgabe wurde gelöst durch eine Armlehne mit den Merkmalen des Anspruchs 1.

Die Armlehne umfasst eine Basis und eine relativ zu der Basis zwischen einer ersten Position, einer zweiten Position in entgegengesetzte Verschieberichtungen entlang einer Bewegungsbahn verschiebbaren Armauflage. Dabei ist die Armauflage auch in beliebige Zwischenpositionen zwischen der ersten Position und der zweiten Position bewegbar. Die Armauflage ist translatorisch entlang der Bewegungsbahn verschiebbar. Die Bewegungsbahn kann gerade oder gekrümmt ausgebildet sein oder wenigstens einen geraden und wenigstens einen gekrümmten Abschnitt aufweisen.

Die Armlehne umfasst eine Führungsvorrichtung aufweisend der Basis zugeordnete erste Führungsmittel und der Armauflage zugeordnete zweite Führungsmittel. Die ersten Führungsmittel sind z.B. an der Basis unmittelbar oder mittelbar befestigt oder einteilig damit ausgebildet. Die zweiten Führungsmittel sind z.B. an der Armauflage unmittelbar oder mittelbar befestigt oder einteilig damit ausgebildet. Die ersten Führungsmittel und die zweiten Führungsmittel bilden zusammenwirkende Führungsflächen aus, die relativ zueinander bewegbar sind. Die Führungsmittel begrenzen die Bewegung der Armauflage in wenigstens eine Richtung, die rechtwinklig zu der Verschieberichtung gerichtet ist.

Zwischen den Führungsmitteln ist ein Spiel ausgebildet. Wenn eine Kraft F auf die Armlauflage einwirkt, stehen Führungsflächen der ersten Führungsmittel und der zweiten Führungsmittel in Kontakt. Die Führungsvorrichtung umfasst ein elastisches Element, welches die ersten Führungsmittel in Kontakt mit den zweiten Führungsmittel hält, auch wenn die Armauflage entlastet wird. Mit Kontakt ist im Sinne der Erfindung nicht ausschließlich der unmittelbare Kontakt zu verstehen, sondern auch ein mittelbarer Anschlag der zusammenwirkenden Führungsmittel.

Das elastische Element belastet die ersten Führungsmittel oder die zweiten Führungsmittel derart in eine erste Belastungs-Richtung relativ zu den jeweils anderen Führungsmitteln, wie es der Relativposition der ersten Führungsmittel zu den zweiten Führungsmittel bei einer definierten Belastung entspricht. Bei der Armauflage ist das z.B. eine Belastungssituation, bei welcher die Armauflage nach unten belastet wird, weil sich ein Sitzinsasse darauf abstützt. Mit anderen Worten, das elastische Element belastet die zusammenwirkenden Führungsmittel in eine Relativposition, wie sie sich aufgrund der Abstütz-Belastung durch einen Sitzinsassen einstellen würde. Im tatsächlichen Belastungsfall tritt dann keine Relativbewegung der Armauflage zu der Basis in diese Belastungs-Richtung auf.

Bei einer Belastung in eine zweite Belastungs-Richtung, die der ersten Belastungs-Richtung entgegengesetzt gerichtet ist, wie z.B. beim Schwenken der Armauflage aus einer Position, bei welcher eine Längsmittelachse etwa horizontal ausgerichtet ist, in eine etwa vertikale Ausrichtung, ist das Spiel weniger störend, da die Armauflage von dem elastischen Element gedämpft wird. Darüber hinaus ist die Belastung in der Regel geringer, so dass das elastische Element ein Spiel ebenfalls verhindert oder dieses dämpft. Das Spiel bei einer solchen Belastung kann zudem beeinflusst werden, indem das elastische Element steifer oder weniger steif ausgelegt wird.

Das elastische Element kann z.B. selbst elastisch verformbar sein oder es kann z.B. von einer Feder belastet sein. Das elastische Element kann z.B. von einem Kunststoff, z.B. von einem Kunststoffschaum, gebildet sein.

Die zusammenwirkenden Führungsflächen, sind im Wesentlichen unverformbar ausgebildet. Die Führungsflächen sind z.B. von einem steifen Kunststoff, einem Metall oder einem Verbundwerkstoff gebildet. Unverformbar bedeutet im Sinne der Erfindung, dass sich die Führungsflächen bei einer üblicherweise stattfindenden Belastung nicht oder lediglich unwesentlich verformen.

Die ersten Führungsmittel und / oder die zweiten Führungsmittel umfassen wenigstens ein Lagerbauteil, welches unmittelbar oder mittelbar an der Basis oder an der Armauflage befestigbar ist. Das Lagerbauteil begrenzt die Bewegung der Armauflage in wenigstens eine rechtwinklig zur Verschieberichtung angeordnete Richtung. Das Lagerbauteil kann z.B. die Bewegung der Armauflage in zwei zu der Verschieberichtung rechtwinklig gerichtete Raumrichtungen begrenzen.

Das Lagerbauteil ist z.B. im Wesentlichen unverformbar ausgebildet. Das Lagerbauteil ist z.B. von einem steifen Kunststoff oder einem Metall gebildet. Bei dem Lagerbauteil kann es sich um ein Gleitlager, ein Kugellager oder ein Rollenlager handeln.

Das elastische Element ist z.B. dem Lagerbauteil zugeordnet. Es kann z.B. an dem Lagerbauteil befestigt sein. Das Lagerbauteil ist auf diese Weise zusammen mit dem elastischen Element auf einfache Weise entsprechend der Belastungsposition der zusammenwirkenden Führungsmittel montierbar.

Das Lagerbauteil ist z.B. als Ring ausgebildet. Der Ring umschließt z.B. eine Stange der Führungsmittel wenigstens teilweise. Mit anderen Worten muss der Ring nicht geschlossen sein, es kann sich um einen offenen Ring handeln, welcher die Stange teilweise umschließt. Der Ring kann die Stange gemäß einer alternativen Ausführung auch vollständig umschließen.

Z.B. umfassen die ersten Führungsmittel oder die zweiten Führungsmittel wenigstens ein Paar beabstandeter Lagerbauteile. Wenn die Armauflage z.B. außerhalb des Zwischenraums zwischen den beiden Lagerbauteilen belastet wird, kann z.B. ein Kippmoment um eines der beiden Lagerbauteile auftreten. Jedes der beiden Lagerbauteile wird dann in entgegengesetzte Richtungen belastet.

Die zusammenwirkenden Führungsmittel umfassen z.B. eine Stange, die mit wenigstens einer Aufnahme eine Führung bildet. Die Stange ist z.B. an der Aufnahme geführt oder die Aufnahme ist an der Stange geführt. Die Stange ist relativ zu der Aufnahme translatorisch verschiebbar. Die Stange kann z.B. aus Kunststoff, einem Metall oder einem Verbundwerkstoff gebildet sein.

Die Stange ist z.B. der Armauflage und die Aufnahme der Basis zugeordnet. Gemäß einer Alternative ist die Stange z.B. der Basis und die Aufnahme der Armauflage zugeordnet. Die Stange ist z.B. an der Armauflage oder an der Basis befestigt oder einteilig damit ausgebildet. Die Aufnahme ist z.B. an der Basis oder an der Armauflage befestigt oder einteilig damit ausgebildet.

Die Führungsvorrichtung umfasst z.B. zwei Stangen. Die Stangen wirken z.B. mit wenigstens einer Aufnahme zusammen. Die Stangen sind z.B. parallel angeordnet. Eine Längsachse der Stangen ist z.B. in Verschieberichtung gerichtet. Jede Stange wirkt z.B. mit wenigstens einem Lagerbauteil zusammen.

Jedes Lagerbauteil kann in einer separaten Aufnahme angeordnet sein. Alternativ sind z.B. je zwei Lagerbauteile, die mit einer Stange zusammenwirken in einer Aufnahme angeordnet. Gemäß einer weiteren Alternative ist z.B. jede Stange in zwei Lagerbauteilen geführt, wobei vier Lagerbauteile in einer Aufnahme angeordnet sind. Die Aufnahme kann der Basis oder der Armauflage zugeordnet sein.

Die Stange ist z.B. zylindrisch, insbesondere kreiszylindrisch und die Aufnahme komplementär ausgebildet. Das ermöglicht eine einfache Fertigung und gewährleistet eine klemmfreie Führung.

Die Armauflage ist z.B. um eine Schwenkachse zwischen einer primären Position und einer sekundären Position schwenkbar. Die primäre Position ist z.B. eine etwa horizontale Gebrauchsposition und die sekundäre Position eine etwa vertikale Nichtgebrauchsposition.

Weitere Vorteile der Erfindung ergeben sich anhand der Beschreibung von in den Fig. schematisch dargestellten Ausführungsbeispielen. Es zeigen:
Fig. 1 eine perspektivische Ansicht einer Armlehne von vorne, wobei sich eine Armauflage der Armlehne in einer hinteren Position befindet,
Fig. 2 die Armlehne gemäß Fig. 1, wobei die Armauflage in eine vordere Position verlagert ist,
Fig. 3 eine Seitenansicht der Armlehne, wobei die Armauflage in der hinteren Position angeordnet ist,
Fig. 4 eine Seitenansicht der Armlehne, wobei die Armauflage in einer Zwischenposition angeordnet ist,
Fig. 5 eine Seitenansicht der Armlehne, wobei die Armauflage in der vorderen Position angeordnet ist,
Fig. 6 eine perspektivische Darstellung der Armlehne von vorne, gemäß Fig. 1, wobei ein Gehäuse der Armauflage nicht dargestellt ist,
Fig. 7 eine Frontdarstellung der Armlehne gemäß Ansichtspfeil VII in Fig. 3,
Fig. 8 eine Längsschnittdarstellung einer Armlehne aus dem Stand der Technik,
Fig. 9 eine Längsschnittdarstellung der erfindungsgemäßen Armlehne gemäß Schnittlinie IX - IX in Fig. 7,
Fig. 10 die Armlehne gemäß Fig. 9, wobei die Armauflage in der Zwischenposition angeordnet ist und wobei die Schraffur der Übersichtlichkeit halber nicht dargestellt ist,
Fig. 11 die Armlehne gemäß Fig. 9, wobei die Armauflage in der vorderen Position angeordnet ist und wobei die Schraffur der Übersichtlichkeit halber nicht dargestellt ist,
Fig. 12 eine Schnittdarstellung gemäß Schnittlinie XII - XII in Fig. 9, wobei die Schraffur der geschnittenen Flächen der Übersichtlichkeit halber nicht dargestellt ist,
Fig. 13 eine Schnittdarstellung gemäß Schnittlinie XIII - XIII in Fig. 9, wobei die Schraffur der geschnittenen Flächen der Übersichtlichkeit halber nicht dargestellt ist,
Fig. 14 perspektivische Einzelteildarstellung der Aufnahme einschließlich der Lager von vorne,
Fig. 15 in Anlehnung an Fig. 14 die Anordnung der Lager, wobei die Aufnahme 21 nicht dargestellt ist,
Fig. 16 eine Prinzipskizze der Armlehne gemäß dem ersten Ausführungsbeispiel in Längsschnittdarstellung,
Fig. 17 eine der Fig. 16 entsprechende Prinzipskizze einer alternativen Ausführungsform der Armlehne in Längsschnittdarstellung, wobei die Schraffur der Übersichtlichkeit halber nicht dargestellt ist.

Eine Armlehne insgesamt ist in den Fig. mit dem Bezugszeichen 10 bezeichnet. Gleiche Bezugszeichen in den unterschiedlichen Fig. bezeichnen entsprechende Teile, auch wenn kleine Buchstaben nachgestellt oder weggelassen sind.

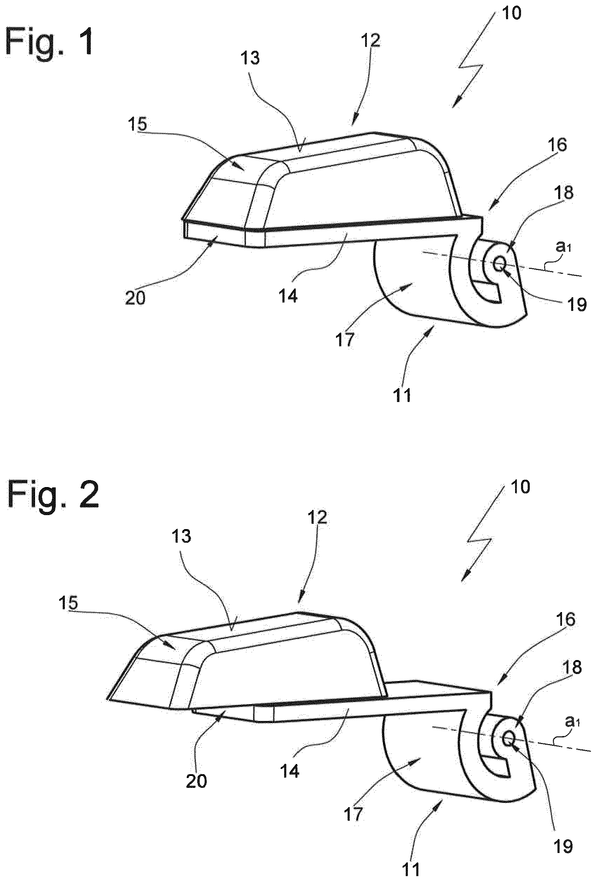

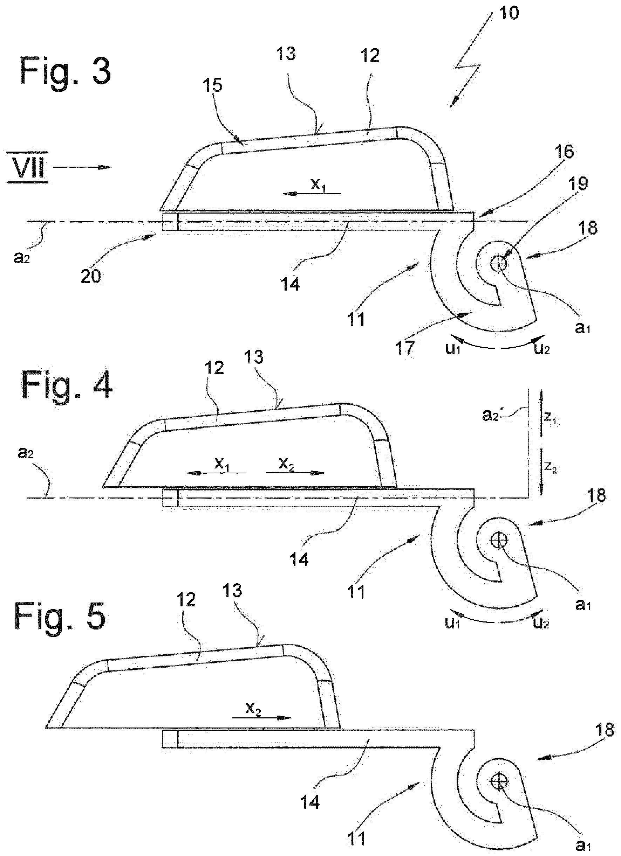

Die Armlehne 10 umfasst gemäß einem ersten, in den Fig. 1 bis 7 und 9 bis 16 dargestellten Ausführungsbeispiel eine Basis 11 sowie eine Armauflage 12 mit einer Auflagefläche 13. Auf der Auflagefläche 13 kann sich der Benutzer abstützen. Die Armauflage 12 ist relativ zu der Basis 11 in die Richtungen x1 und x2 bewegbar. In den Fig. 1 und 3 ist die Armauflage 12 in einer hinteren Position, in Fig. 4 in einer mittleren Position und in den Fig. 2 und 5 in einer vorderen Position dargestellt. Die mittlere Position entspricht einer Zwischenposition. Auf diese Weise kann die Position der Armauflage 12 optimal an den Sitzinsassen angepasst werden.

Im vorliegenden Ausführungsbeispiel ist die Basis 11 von einer fahrzeugfesten Schwenkachse a₁ sowie von einem um die Schwenkachse a schwenkbaren Arm 14 gebildet, so dass die Armauflage 12 um die Schwenkachse a1 in Schwenkrichtungen u1 und u2 schwenkbar ausgebildet ist. Aus einer in Fig. 3 dargestellten Position, in welcher eine Längsachse a2 der Armauflage 12 etwa horizontal angeordnet ist, kann die Armauflage in Richtung u1 in eine nicht dargestellte Position geschwenkt werden, in welcher die Längsachse a2 etwa vertikal angeordnet ist. Diese Position ist in Fig. 4 durch eine Strichpunktlinie a₂' angedeutet, die parallel zu den Richtungen z1 und z2 ausgebildet ist.

Ein Schwenkgelenk kann z.B. zwischen einem nicht dargestellten Sockel und dem Arm 14 gebildet sein. Ein schwenkachsenseitiger Bereich 16 des Arms 14 bildet einen Fortsatz 17, der an einem Lagerbereich 18 mit Öffnungen 19 zum Eingreifen von Lagermitteln versehen ist. Der Arm 14 bildet darüber hinaus ein freies Ende 20 aus.

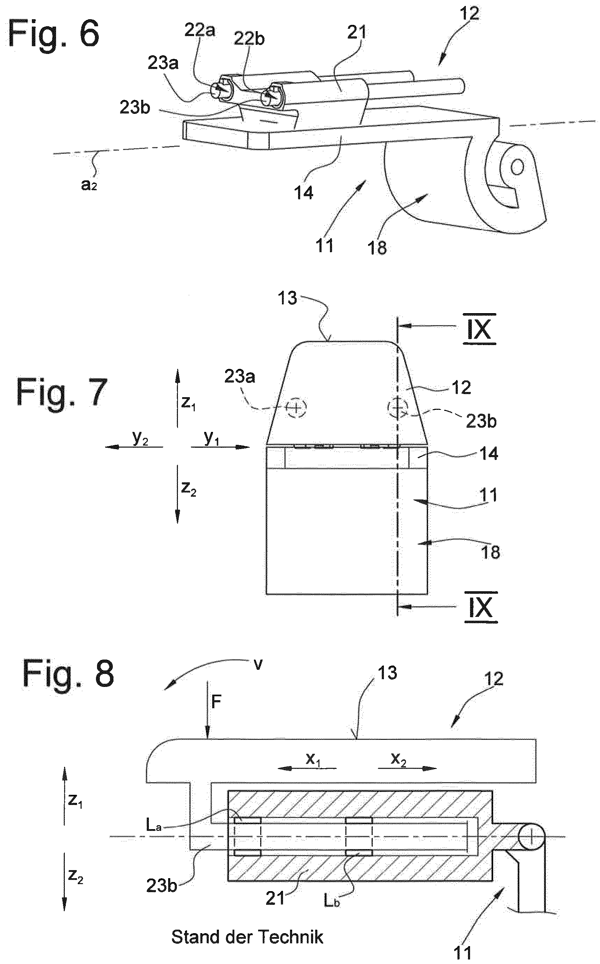

Fig. 6 zeigt die Armlehne 10, wobei ein Gehäuse 15 der Armauflage 12 nicht dargestellt ist. Der Arm 14 ist fest mit einer Aufnahme 21 verbunden, in welcher zwei Aussparungen 22a und 22b in Form linearer Bohrungen ausgebildet sind. Die Aussparung 22a ist von einer Stange 23a und die Aussparung 22b ist von einer Stange 23b durchgriffen. Die Stangen 23a und 23b sind fest an der Armauflage 12 gehalten. Eine Längsmittelachse der Aussparungen 22a und 22b sowie eine Längsmittelachse der Stangen 23a und 23b sind parallel zu einer Längsachse a2 der Armlehne ausgerichtet.

Bei einer Bewegung der Armauflage 12 in eine der Richtungen x1 oder x2 bewegen sich die Stangen 23a und 23b relativ zu der Aufnahme 21 in den Aussparungen 22a und 22b. Im vorliegenden Ausführungsbeispiel sind die Stangen 23a und 23b und die Aussparungen 22a und 22b kreiszylindrisch ausgebildet. Sie können alternativ aber auch eine andere Form besitzen.

In Fig. 8 ist eine Armlehne aus dem Stand der Technik dargestellt. Die Armauflage 12 war im Stand der Technik gemäß Fig. 8 fest mit zwei ringförmigen Lagern La und Lb verbunden. Diese bestanden aus einem elastisch verformbaren Material. Bei einer Belastung mit einer Kraft F verformte sich dieses, bis die Stangen 23a und 23b an der Laibung der Aussparungen 22a und 22b anschlugen. Das nahm der Benutzer der Armlehne als deutliches Spiel war. Da der Schwerpunkt der Kraft F in der üblichen Belastungssituation in Richtung x1 vor dem Lager La liegt, kippt die Armauflage 12 relativ zu der Aufnahme 21 im Rahmen des Spiels der Stangen 23a und 23b in den Aussparungen 22a und 22b in Richtung v.

Entsprechend der Aufgabe der Erfindung sollte dieses Spiel vermieden werden.

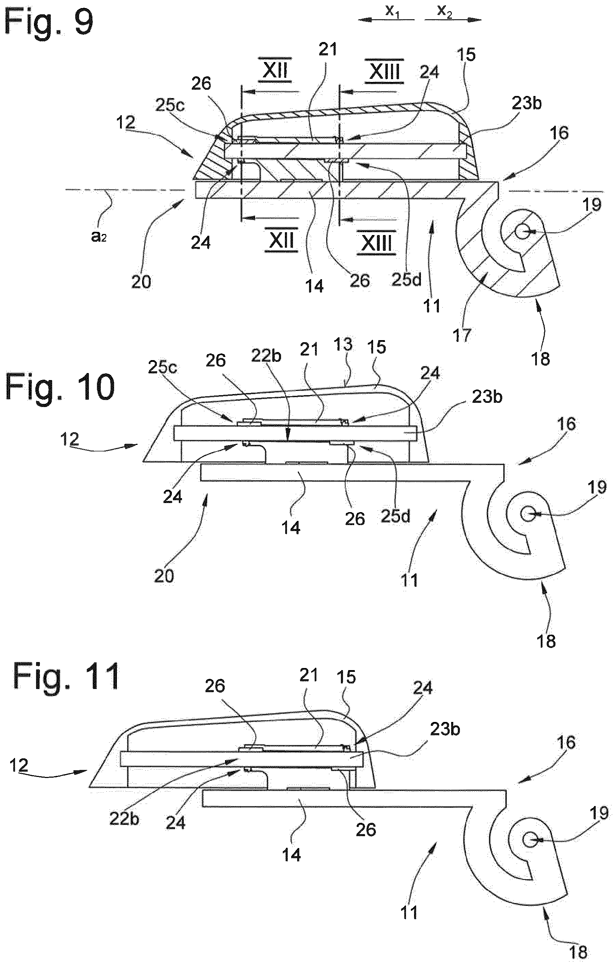

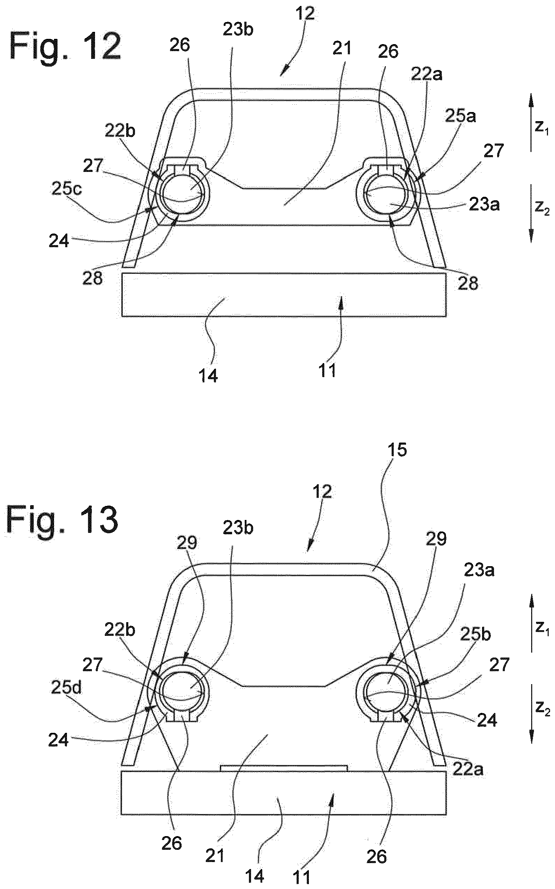

Wie in den Fig. 9, 12 und 13 zu erkennen ist, weist die erfindungsgemäße Armlehne 10 endseitig der Aussparung 22b Lagersitze auf, die jeweils mit einem ringförmigen Lager 24 versehen sind, welches als Gleitlagerung für die Stangen 23a und 23b dient. Aus den Schnittdarstellungen gemäß der Fig. 12 und 13 ist ersichtlich, dass insgesamt vier Lagersitze 25a, 25b, 25c und 25d in der Aufnahme 21 ausgebildet sind. Die Stange 23a ist mittels der in den Lagersitzen 25a und 25b angeordneten Lager 24 und die Stange 23b mittels der in den Lagersitzen 25c und 25d angeordneten Lager 24 gelagert. Die Lager 24 begrenzen eine Bewegung jeder Stange 23a und 23b in einer Y-Z-Ebene, welche sich aus den Richtungspfeilen y1 und y2 sowie z1 und z2 ergibt.

Bei einer Belastung der Armauflage 12 mit einer Kraft F, was der Hauptbelastungssituation durch Abstützen des Arms eines Benutzers entspricht, liegen die Stangen 23a und 23b an einer Laibung 27 jedes Lagers 24 an. Aufgrund des Kippens der Armauflage 12 liegen die Stangen 23a und 23b bei den Lagersitzen 25a und 25c an einer Unterseite 28 (siehe die Fig. 12 und 13) und bei den Lagersitzen 25b und 25d an einer Oberseite 29 der Aussparungen 22a und 22b bzw. der Lager 24 an.

Jedes Lager 24 ist z.B. als geschlossener oder offener Ring ausgebildet und mit einem elastischen Element 26 versehen. Der Ring ist z.B. von einem relativ steifen Kunststoff gebildet. Das elastische Element 26 ist lediglich an einem Umfangsteilbereich des Lagers 24 ausgebildet. Auf diese Weise belastet das elastische Element 26 die Stangen 23a und 23b gegen die dem elastischen Element 26 diametral gegenüberliegende Seite der Laibung 27, insbesondere der Laibung 27 des Rings. Wie in den Fig. 12 und 13 zu erkennen, sind die Lager 24 derart relativ zu der Aufnahme 21 angeordnet, dass die Stangen 23a und 23b von dem elastischen Element 26 der Lagerstellen 25a und 25c in Richtung z2 und von dem elastischen Element 26 der Lagerstellen 25b und 25d in Richtung z1 belastet werden, was der Relativposition von den Stangen 23a und 23b zu der Aufnahme 21 im Falle des Aufbringens einer Kraft F auf die Armauflage 12, insbesondere auf die Auflagefläche 13, entspricht.

Damit verbleibt die Armauflage 12 nach Wegnahme der Kraft F in derselben Position relativ zu der Aufnahme 21. Der Benutzer kann bei Be- bzw. Entlastung der Armauflage 12 kein Spiel feststellen.

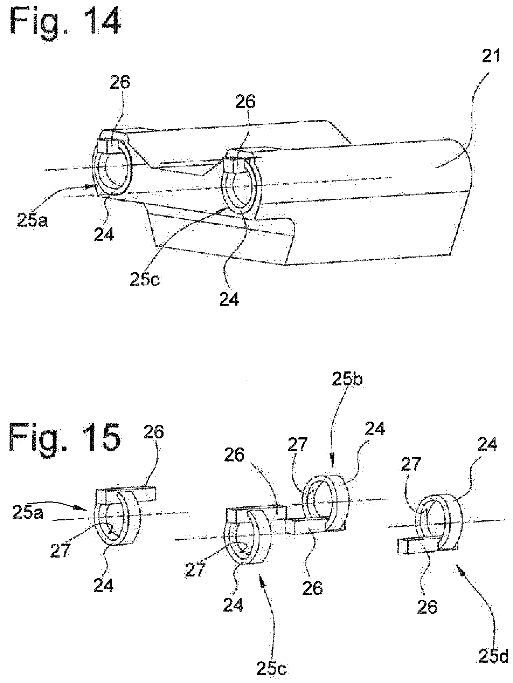

Fig. 14 zeigt die Baugruppe aus der Aufnahme 21 und den Lagern 24. In Fig. 15 sind die Lager 21 in der gleichen Anordnung wie in Fig. 14 dargestellt, wobei die Aufnahme 21 der Übersichtlichkeit halber nicht dargestellt ist.

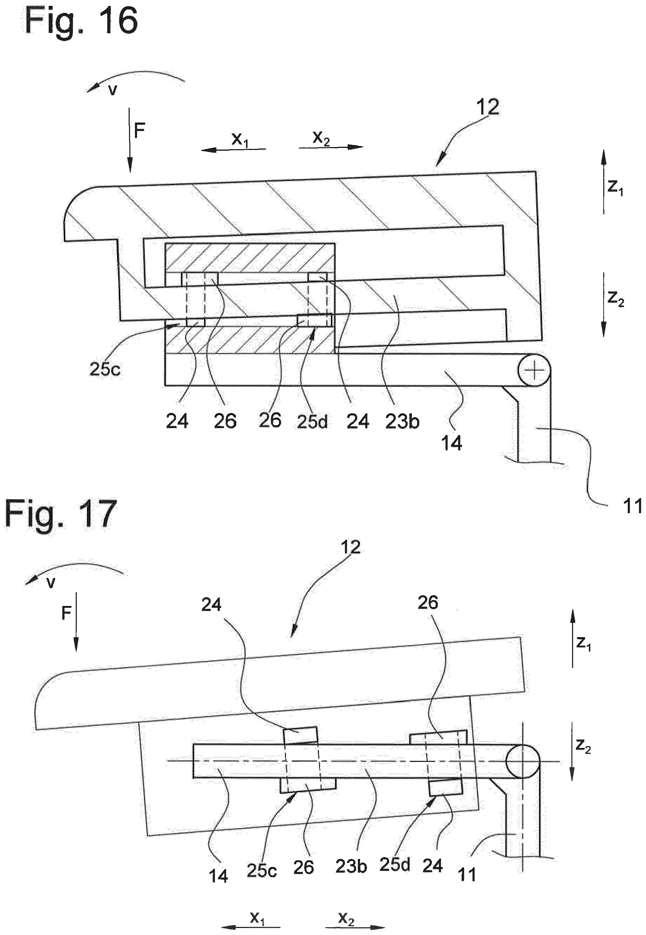

In Fig. 16 ist das erste Ausführungsbeispiel noch einmal als Prinzipskizze dargestellt. Die elastischen Elemente 26 belasten die Stange 23b entsprechend der Belastungsrichtung durch eine Kraft F, die der Hauptbelastungssituation durch Aufstützen eines Arms des Benutzers entspricht, wobei die Armauflage in Richtung v gekippt wird. Das Lager 24 der Lagerstelle 25c wird in Richtung z2 und das Lager 24 der Lagerstelle 25d in Richtung z1 belastet.

In Fig. 16 ist eine Prinzipskizze eines zweiten Ausführungsbeispiels der Armlehne 10 dargestellt, welches sich lediglich dadurch von dem ersten Ausführungsbeispiel unterscheidet, dass die Aufnahme 21 fest mit der Armauflage 12 und die Stangen 23a und 23b fest mit dem Arm 14 verbunden sind. In diesem Fall werden die Stangen 23a und 23b von den elastischen Elementen 26 der Lagerstellen 15a und 25c in Richtung z1 und von den elastischen Elementen 26 der Lagerstellen 15b und 15d in Richtung z2 belastet, was der Belastungssituation unter Einwirkung einer Kraft F entspricht.

## Patentansprüche

1. Armlehne mit einer Basis (11) und mit einer Armauflage (12), welche relativ zu der Basis (11) über Zwischenpositionen zwischen einer ersten Position und einer zweiten Position in entgegengesetzte Verschieberichtungen (x1, x2) entlang einer Bewegungsbahn translatorisch verschiebbar ist, mit einer Führungsvorrichtung umfassend der Basis (11) zugeordnete erste Führungsmittel und der Armauflage (12) zugeordnete zweite Führungsmittel, die zusammenwirkende, relativ zueinander bewegbare Führungsflächen ausbilden, welche die Bewegung der Armauflage (12) relativ zu der Basis (11) in wenigstens eine Richtung rechtwinklig zur Verschieberichtung begrenzen, wobei zwischen den ersten Führungsmitteln und den zweiten Führungsmitteln ein Spiel ausgebildet ist und wobei im Falle einer Abstütz-Belastung hervorgerufen von dem Arm eines Benutzers in Form einer auf die Armauflage einwirkenden Kraft (F) nach unten Führungsflächen der ersten Führungsmittel und der zweiten Führungsmittel in einer Relativposition in Kontakt stehen, **dadurch gekennzeichnet, dass** die Führungsvorrichtung wenigstens ein elastisches Element (26) umfasst, welches die ersten Führungsmittel derart in Anlage an die zweiten Führungsmittel belastet, dass bei einer Entlastung der Kontakt und die Relativposition erhalten bleiben.

2. Armlehne nach Anspruch 1, **dadurch gekennzeichnet, dass** die zusammenwirkenden Führungsflächen im Wesentlichen unverformbar ausgebildet ist.

3. Armlehne nach einem der vorangehenden Ansprüche, **dadurch gekennzeichnet, dass** die ersten Führungsmittel oder die zweiten Führungsmittel wenigstens ein an der Basis (11) und / oder an der Armauflage (12) befestigbares Lagerbauteil (24) umfassen.

4. Armlehne nach Anspruch 3, **dadurch gekennzeichnet, dass** das elastische Element (26) dem Lagerbauteil (24) zugeordnet ist.

5. Armlehne nach Anspruch 3 oder 4, **dadurch gekennzeichnet, dass** das Lagerbauteil (24) als Ring ausgebildet ist.

6. Armlehne nach einem der Ansprüche 3 bis 5, **dadurch gekennzeichnet, dass** die ersten Führungsmittel oder die zweiten Führungsmittel wenigstens ein Paar beabstandeter Lagerbauteile (24) umfasst.

7. Armlehne nach einem der vorangehenden Ansprüche, **dadurch gekennzeichnet, dass** die zusammenwirkenden Führungsmittel wenigstens eine Stange (23a, 23b) umfassen, die mit wenigstens einer Aufnahme (21) eine Führung bildet.

8. Armlehne nach Anspruch 7, **dadurch gekennzeichnet, dass** die Stange (23a, 23b) der Armauflage (12) und die Aufnahme (21) der Basis (11) zugeordnet ist oder dass die Stange (23a, 23b) der Armauflage (12) und die Aufnahme (21) der Basis (11) zugeordnet ist.

9. Armlehne nach einem der Ansprüche 7 oder 8, **dadurch gekennzeichnet, dass** die Führungsvorrichtung zwei Stangen (23a, 23b) umfasst, die mit wenigstens einer Aufnahme (21) zusammenwirkt.

10. Armlehne nach einem der Ansprüche 7 bis 9, **dadurch gekennzeichnet, dass** die Stange zylindrisch, insbesondere kreiszylindrisch, und die Aufnahme komplementär ausgebildet ist.

## Claims

1. An armrest having a base (11) and an arm support (12) which is translationally displaceable relative to the base (11) over intermediate positions between a first position and a second position in opposite displacement directions (x1, x2) along a movement path, having a guide device comprising first guide means associated with the base (11) and second guide means associated with the arm support (12), which form cooperating guide surfaces movable relative to one another, which limit the movement of the arm support (12) relative to the base (11) in at least one direction at right angles to the displacement direction, wherein a play is formed between the first guide means and the second guide means and wherein in the case of a support loading in the form of a force (F) acting on the arm support in downward direction caused by the arm of a user, guide surfaces of the first guide means and the second guide means are in contact in a relative position, **characterized in that** the guide device comprises at least one elastic element (26) which loads the first guide means in contact with the second guide means such that the contact and the relative position is maintained during an unloading.

2. The armrest according to claim 1, **characterized in that** the cooperating guide surfaces are formed substantially non-deformable.

3. The armrest according to one of the preceding claims, **characterized in that** the first guide means or the second guide means comprise at least one bearing component (24) that can be fastened on the base (11) and/or on the arm support (12).

4. The armrest according to claim 3, **characterized in that** the elastic element (26) is associated with the bearing component (24).

5. The armrest according to claim 3 or 4, **characterized in that** the bearing component (24) is formed as a ring.

6. The armrest according to one of claims 3 to 5, **characterized in that** the first guide means or the second guide means comprises at least one pair of spaced bearing components (24).

7. The armrest according to one of the preceding claims, **characterized in that** the cooperating guide means comprise at least one rod (23a, 23b), which form a guide having at least one mount (21).

8. The armrest according to claim 7, **characterized in that** the rod (23a, 23b) is associated with the arm support (12) and the mount (21) is associated with the base (11) or that the rod (23a, 23b) is associated with the arm support (12) and the mount (21) is associated with the base (11).

9. The armrest according to one of claims 7 or 8, **characterized in that** the guide device comprises two rods (23a, 23b) which work together with at least one mount (21).

10. The armrest according to one of claims 7 to 9, **characterized in that** the rod is formed cylindrical, in particular circular cylindrical, and the mount is formed complementary.

## Revendications

1. Accoudoir doté d'une base (11) et d'un repose-bras (12) qui peut coulisser par rapport à la base (11) en passant par des positions intermédiaires entre une première position et une deuxième position dans des directions de coulissement opposées (x1, x2) le long d'un chemin de déplacement, et doté d'un dispositif de guidage comprenant des premiers moyens de guidage associés à la base (11) et des deuxièmes moyens de guidage associés au repose-bras (12) qui forment des surfaces de guidage coopérantes et mobiles entre elles qui limitent le déplacement du repose-bras (12) par rapport à la base (11) au moins dans une direction perpendiculaire à la direction de coulissement, dans lequel il existe un jeu entre les premiers moyens de guidage et les deuxièmes moyens de guidage et dans lequel, si une charge d'appui est générée par le bras d'un utilisateur sous la forme d'une force (F) agissant vers le bas sur le repose-bras, les surfaces de guidage des premiers moyens de guidage et des deuxièmes moyens de guidage sont mis en contact dans une position relative, **caractérisé en ce que** le dispositif de guidage comprend au moins un élément élastique (26) qui appuie les premiers moyens de guidage sur les deuxièmes moyens de guidage de telle sorte que le contact et la position relative sont conservés lors du soulagement de la contrainte.

2. Accoudoir selon la revendication 1, **caractérisé en ce que** les surfaces de guidage coopérantes sont sensiblement indéformables.

3. Accoudoir selon une des revendications précédentes, **caractérisé en ce que** les premiers moyens de guidage ou les seconds moyens de guidage comprennent au moins un élément de palier (24) pouvant être fixé sur la base (11) et/ou sur le repose-bras (12).

4. Accoudoir selon la revendication 3, **caractérisé en ce que** l'élément élastique (26) est associé à l'élément de palier (24).

5. Accoudoir selon la revendication 3 ou 4, **caractérisé en ce que** l'élément de palier (24) est en forme d'anneau.

6. Accoudoir selon une des revendications 3 à 5, **caractérisé en ce que** les premiers moyens de guidage ou les seconds moyens de guidage comprennent au moins une paire d'éléments de palier (24) espacés.

7. Accoudoir selon une des revendications précédentes, **caractérisé en ce que** les moyens de guidage coopérants comprennent au moins une tige (23a, 23b) qui forme un élément de guidage avec au moins un élément de réception (21).

8. Accoudoir selon la revendication 7, **caractérisé en ce que** la tige (23a, 23b) est associée au repose-bras (12) et l'élément de réception (21) à la base (11) ou que la tige (23a, 23b) est associée au repose-bras (12) et l'élément de réception (21) à la base (11).

9. Accoudoir selon la revendication 7 ou 8, **caractérisé en ce que** le dispositif de guidage comprend deux tiges (23a, 23b) qui coopèrent avec au moins un élément de réception (21).

10. Accoudoir selon une des revendications 7 à 9, **caractérisé en ce que** la tige est cylindrique, en particulier de forme cylindrique circulaire, et que l'élément de réception est de forme complémentaire.
